(19) Europäisches Patentamt
European Patent Office
Office européen des brevets

(11) EP 2 747 091 A1

(12) EUROPEAN PATENT APPLICATION

(43) Date of publication:
**25.06.2014 Bulletin 2014/26**

(51) Int Cl.:
***H01B 1/04*** *(2006.01)* ***C01B 31/02*** *(2006.01)*
***C09C 1/28*** *(2006.01)* ***D21H 17/69*** *(2006.01)*

(21) Application number: **12290451.9**

(22) Date of filing: **19.12.2012**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicants:
- **Imerys Talc Europe**
  **31100 Toulouse (FR)**
- **Centre National de la Recherche Scientifique (CNRS)**
  **75794 Paris Cedex 16 (FR)**

(72) Inventors:
- **Fraichard, Lucie**
  **31400 Toulouse (FR)**
- **Gressier, Marie**
  **31320 Auzeville Tolosane (FR)**
- **Menu, Marie-Joëlle**
  **31670 Labege (FR)**
- **Bonino, Jean-Pierre**
  **31320 Péchabou (FR)**
- **Martin,Francois**
  **31570 Sainte Foy D'Aigrfeuille (FR)**
- **Flahaut, Emmanuel**
  **31320 Pechbusque (FR)**
- **Greenhill-Hooper, Michael**
  **32340 Miradoux (FR)**
- **Dumas, Angela**
  **31320 Péchabou (FR)**

(74) Representative: **Johnston, Magnus George**
**Haseltine Lake LLP**
**Redcliff Quay**
**120 Redcliff Street**
**Bristol BS1 6HU (GB)**

# (54) Talc composition

(57) The invention concerns an electrically conducting talc composition comprising synthetic talc particulate coated with an electrically conducting coating agent, wherein the coating agent may comprise carbon nanotubes or an electrically conductive polymeric material, such as a nanocarbon material, for example, carbon nanotubes. The invention further concerns a method of making an electrically conducting talc composition according to the invention comprising forming electrically conducting coating agent on or about particles of the talc particulate.

EP 2 747 091 A1

## Description

### TECHNICAL FIELD

The present invention is directed to an electrically conducting talc composition comprising synthetic and/or natural particulate coated with an electrically conducting coating agent, to a method of making said electrically conducting talc composition, to use of said electrically conducting talc composition, and to functional compositions comprising said electrically conducting talc composition.

### BACKGROUND

Natural talc is a mineral, a hydrated magnesium silicate of formula $Si_4Mg_3O_{10}(OH)_2$, which is arranged as a stack of laminae. Synthetic talcs are also known. Talc is used in many industries such as paper making, plastic, paint and coatings, rubber, food, electric cable, pharmaceuticals, cosmetics and ceramics as an extender or functional filler. It is a relatively abundant mineral and as the cost of other minerals continue to rise there is an ongoing need to develop the functionality of talc.

### SUMMARY OF THE INVENTION

In accordance with a first aspect, the present invention is directed to an electrically conducting talc composition comprising synthetic talc particulate coated with an electrically conducting coating agent.

In accordance with a second aspect, the present invention is directed to an electrically conducting talc composition comprising natural talc particulate coated with an electrically conductive polymeric material, with the proviso that when the talc composition comprises no particulate other than natural talc particulate, the talc composition further comprises a connecting chemical linker between a surface of the natural talc particles and at least a portion of the electrically conducting polymeric material.

In accordance with a third aspect, the present invention is directed to a method of making an electrically conducting talc composition according to the first aspect, comprising forming electrically conducting coating agent on or about particles of the talc particulate.

In accordance with a fourth aspect, the present invention is directed to a method of making an electrically conducting talc composition according to the second aspect, comprising: (1) combining a chemical linker moiety and natural talc particulate under suitable conditions to produce natural talc particulate comprising talc particles having chemical linker moieties attached thereto; and (2) forming an electrically conducting polymer material on or about particles of the talc particulate, wherein at a least a portion of the electrically conducting polymeric material is connected to the talc particles via the chemical linker moiety.

In accordance with a fifth aspect, the present invention is directed to a functional composition comprising an electrically conducting talc composition according to the first or second aspects, or obtainable by the method of the third and fourth aspects.

In accordance with a sixth aspect, the present invention is to the use of a electrically conducting talc composition according to first or second aspects, or obtainable by the third or fourth aspects, as a filler in a functional composition, for example, a polymer composition.

### BRIEF DESCRIPTION OF THE DRAWINGS

Figure 1 is a graph showing the electrical conductivity of synthetic talc and electrically conducting talc compositions comprising said synthetic talc, as prepared in the Examples.

Figure 2 is a graph showing the electrical conductivity of polyethylene composites comprising the electrically conducting talc compositions, as prepared in the Examples.

### DETAILED DESCRIPTION OF THE INVENTION

*Electrically conducting talc composition*

As used herein, the term "electrically conducting talc composition" means the talc composition has an electrical conductivity which is greater than the talc particulate from which it is formed. In certain embodiments, the electrically

conducting talc composition has an electrically conductivity which is at least five orders of magnitude greater than the talc particulate from which it is formed, for example, at least six orders of magnitude greater, or at least seven orders of magnitude greater, or at least eight orders of magnitude greater, or at least about nine orders of magnitude greater, or at least ten orders of magnitude greater than the talc particulate from which it is formed. Electrically conductivity may be determined in accordance with the methods described in the Examples section below, or any suitable method which gives essentially the same result.

In certain embodiments, the electrically conducting talc composition has an electrical conductivity of at least about 0.01 $S \cdot m^{-1}$, for example, at least about 0.05 $S \cdot m^{-1}$, or at least about 0.10 $S \cdot m^{-1}$, or at least about 0.25 $S \cdot m^{-1}$, or at least about 0.50 $S \cdot m^{-1}$, or at least about 0.75 $S \cdot m^{-1}$, or at least about 1.0 $S \cdot m^{-1}$, or at least about 10 $S \cdot m^{-1}$, or at least about 25 $S \cdot m^{-1}$, or at least about 50 $S \cdot m^{-1}$, or at least about 60 $S \cdot m^{-1}$, or at least about 70 $S \cdot m^{-1}$, or at least about 80 $S \cdot m^{-1}$, or at least about 90 $S \cdot m^{-1}$, or at least about 100 $S \cdot m^{-1}$. In certain embodiments, the electrically conducting talc composition has an electrical conductivity of between about 1 and 120 $S \cdot m^{-1}$, for example, between about 1 and 105 $S \cdot m^{-1}$, or between about 20 and 105 $S \cdot m^{-1}$, or between about 25 and 105 $S \cdot m^{-1}$ or between about 30 and 105 $S \cdot m^{-1}$ or between about 40 and 105 $S \cdot m^{-1}$, or between about 50 and 105 $S \cdot m^{-1}$, or between about 60 and 105 $S \cdot m^{-1}$, or between about 70 and 105 $S \cdot m^{-1}$ or between about 80 and 105 $S \cdot m^{-1}$.

In certain embodiments, the electrically conductive talc composition comprises at least about 50% by weight talc particulate, based on the total weight of the talc composition, for example, at least about 60% by weight, or at least about 70% by weight, or at least about 80% by weight, or at least about 90% by weight, or at least about 95% by weight talc particulate. In certain embodiments, the electrically conductive talc composition comprises from about 50 to about 99% by weight talc particulate, based on the total weight of the talc composition, for example, from about 60 to about 95% by weight, or from about 60 to about 90% by weight, or from about 60 to about 85% by weight, or from about 60 to about 80% by weight, or from about 60 to about 75% by weight, or from about 60 to about 70% by weight talc particulate.

*- talc particulate*

The talc particulate may comprise, include, consist essentially of, or consist of natural talc particulate or synthetic talc particulate or a mixture of natural talc particulate and synthetic talc particulate.

As used herein, the term "natural talc" means talc derived from a natural resource, i.e., natural talc deposits. Natural talc may be either the hydrated magnesium silicate of formula $Si_4Mg_3O_{10}(OH)_2$, which is arranged as a stack of laminae, or the mineral chlorite (hydrated magnesium aluminium silicate), or a mixture of the two, optionally associated with other minerals, for example, dolomite. Natural talc occurs as rock composed of talc crystals.

As used herein, the term "synthetic talc" means talc that has been synthesized using a man-made synthetic process. In certain embodiments, the synthetic talc particulate is one or more of:

(1) synthetic talc prepared in accordance with WO-A-2008/009800 and US-A-2009/0253569, the entire contents of which are hereby incorporated by reference. More particularly, a talcose composition, comprising synthetic mineral particles which contain silicon, germanium and metal, have a crystalline and lamellar structure, and are of formula $-(Si_xGe_{1-x})_4M_3O_{10}(OH)_2-$, M denoting at least one divalent metal and having the chemical formula $Mg_{y(1)}Co_{y(2)}Zn_{y(3)}Cu_{y(4)}Mn_{y(5)}Fe_{y(6)}Ni_{y(7)}Cr_{y(8)}$; each y (i) representing a real number of the interval [0; 1], such that

$$\sum_{i=1}^{8} y(i) = 1$$

x being a real number of the interval [0; 1], obtainable by a process which comprises subjecting a composition comprising swelling TOT-TOT (tetrahedron-octahedron-tetrahedron) interlayer particles, as defined below, to an anhydrous thermal treatment which is carried out at a pressure of less than 5 bar for a period and at a treatment temperature, greater than 300°C, with appropriate conditions selected to obtain the crystallinity and stability desired for said synthetic mineral particles containing silicon, germanium and metal that are to be prepared.

The composition comprising swelling TOT-TOT (tetrahedron-octahedron-tetrahedron) interlayer particles, is formed by interlayering between:

at least one non-swelling mineral phase formed by a stack of elementary laminae of the 2/1 phyllogermanosilicate type and having the chemical formula $-(Si_xGe_{1-x})_4M_3O_{10}(OH)_2-$, and

at least one swelling mineral phase formed by a stack of elementary laminae of the 2/1 phyllogermanosilicate type and at least one interfoliar space between two consecutive elementary laminae; said swelling mineral

phase having the chemical formula $-(SixGe_{1-x})_4M_{3-\epsilon}O_{10}(OH)_2,(M^{2+})_{\epsilon'}\cdot nH_2O-$, in which M, y(i) and x are as defined above, ε and ε' relate to the cation deficit of the elementary laminae of the swelling phase and to the cations present in the interfoliar space(s), respectively,

said composition being **characterized in that** an X-ray diffraction analysis of said swelling TOT-TOT interlayer particles yields a diffractogram having the following characteristic diffraction peaks:

a plane (001) located at a distance of the order of 14-15 A, representing said swelling mineral phase;
planes representing said non-swelling mineral phase: a plane (001) located at a distance of the order of 9.60-10.50 A; a plane (020) located at 4.50-4.60 A; a plane (003) located at 3.10-3.20 A; and a plane (060) located at 1.50-1.55 A.

The composition comprising swelling TOT-TOT (tetrahedron-octahedron-tetrahedron) interlayer particles may be prepared by a method which comprises subjecting a gel containing silicon, germanium and metal and having the chemical formula $-(Si_xGe_{1-x})_4M_3O_{11}\cdot n'(H_2O)-$ (wherein n' is a positive integer), in the liquid state, to a hydrothermal treatement carried out for a suitable period of time and a temperature of from 150°C to 300°C. The resulting colloidal composition is recovered and subjected to a drying step, optionally followed by a step of mechanical grinding to give a solid composition comprising individualized swelling TOT-TOT interlayer particles.
In certain embodiments, the gel composition containing silicon, germanium and metal is prepared by a co-precipitation reaction between:

a liquid composition comprising at least one saline solution selected from: a sodium metasilicate ($Na_2OSiO_2$) solution and a sodium metagermanate ($Na_2OGeO_2$) solution and having the following molar concentration ratios:

$$\frac{[Na_2OSiO_2]}{[Na_2OSiO_2]+[Na_2OGeO_2]} = x$$

and

$$\frac{[Na_2OGeO_2]}{[Na_2OSiO_2]+[Na_2OGeO_2]} = 1 - x;$$

and

a solution of metal chloride(s) ($MCl_2$) comprising at least one divalent metal chloride selected from: magnesium chloride ($MgCl_2$), nickel chloride ($NiCl_2$), cobalt chloride ($CoCl_2$), zinc chloride ($ZnCl_2$), copper chloride ($CuCl_2$), manganese chloride ($MnCl_2$), iron chloride ($FeCl_2$), chromium chloride ($CrCl_2$); with a molar concentration ratio for each of said metal chlorides such that:

$$\frac{[\text{divalent metal}_{(i)}]}{[M]_{(total)}} = y(i)$$

in the presence of a hydrochloric acid solution.

(2) synthetic talc prepared in accordance with WO-A-2008/009801 and US-A-2009/0252963, the entire contents of which are hereby incorporated by reference. More particularly, a synthetic talc composition comprising talc particles of the formula $Si_4Mg_3O_{10}(OH)_2$, wherein said composition is **characterized in that** an X-ray diffraction analysis of said talc particles yields a diffractogram having the following characteristic diffraction peaks: a peak located at 9.40-9.68 A, corresponding to a plane (001); a peak located at 4.50-4.60 A, corresponding to a plane (020); a peak located at 3.10-3.20 A, corresponding to a plane (003); a peak located at 1.50-1.55 A, corresponding to a plane (060). In certain embodiments, the diffraction peak corresponding to the plane (001) is located at a distance of the

order of 9.40-9.43 A. In certain embodiments, said talc particles have a particle size less than 500 nm, for example, a particle size of from 20 nm to 100 nm, as determined transmission electron microscopy, or any suitable method which gives substantially the same result. In certain embodiments, the talc particles are present in individualized and pulverulent form. In certain embodiments, the talc particles are present in a form agglomerated with one another and form aggregates.

The synthetic talc composition described under (2) above may be prepared by a process in which a kerolite composition is subjected to an anhydrous thermal treatment carried out at a pressure below 5 bar for a period and at a treatment temperature greater than 200°C, for example, greater than 300°C, with appropriate conditions selected to obtain thermally stable synthetic talc particles of the formula $Si_4Mg_3O_{10}(OH)_2$. In certain embodiments, the anhydrous thermal treatment is carried out at a temperature of from 500°C to 550°C, optionally wherein the treatment time is greater than 5 hours. In certain embodiments, the anhydrous thermal treatment is carried out in ambient air, inside a crucible. In certain embodiments, mechanical grinding of said synthetic talc composition is carried out in order to obtain a pulverulent composition. In certain embodiments, said kerolite composition is prepared from a silicometallic gel of the formula $Si_4Mg_3O{\cdot}n'H_2O$, which is subjected to a hydrothermal treatment at saturation water vapour pressure and at a temperature of from 100°C to 400°C, for example, from 100°C to 350°C, or from 150°C to 325°C, or from 200°C to 300°C, or from 100°C to 240°C, for a period of from one day to several months, optionally wherein the kerolite composition is subjected to the anhydrous thermal treatment after it has been dried and ground to obtain a pulverulent composition. In certain embodiments, the silicometallic gel is prepared by co-precipitation according to the reaction:

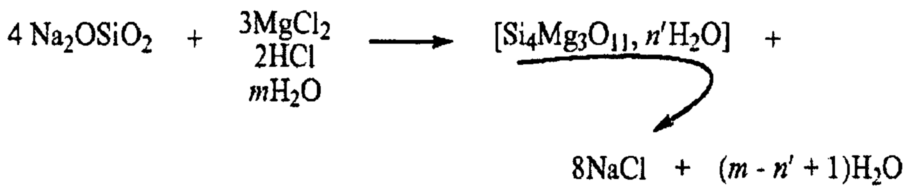


wherein m, n' and (m-n'+1) are positive integers.

(3) synthetic talc prepared in accordance with WO-A-2008/009799 and US-A-2009/0261294, the entire contents of which are hereby incorporated by reference. More particularly, a talcose composition that comprises synthetic mineral particles containing silicon, germanium and metal of formula $-(Si_xGe_{1-x})_4M_3O_{10}(OH)_2-$in which: M denotes at least one divalent metal and has the formula $Mg_{y(1)}Co_{y(2)}Zn_{y(3)}Cu_{y(4)}Mn_{y(5)}Fe_{y(6)}Ni_{y(7)}Cr_{y(8)}$; each y(i) being a real number of the interval [0; 1], such that

$$\sum_{i=1}^{8} y(i) = 1$$

wherein x is a real number of the interval [0; 1], said composition being **characterized in that** in an X-ray diffraction analysis of said synthetic mineral particles containing silicon, germanium and metal, a diffractogram having the following characteristic diffraction peaks is obtained: a peak located at a distance of the order of 9.40-9.68 A, for a plane (001); a peak located at 4.50-4.75 A, for a plane (020); a peak located at 3.10-3.20 A, for a plane (003); a peak located at 1.50-1.55 A, for a plane (060).

In certain embodiments, the diffraction peak corresponding to plane (001) is located at a distance of the order of 9.55-9.65 A. In certain embodiments, the synthetic particles containing silicon, germanium and metal have a unimodal and monodisperse particle size distribution of from 10 nm to 10 $\mu$m. In certain embodiments, said synthetic particles containing silicon, germanium and metal are present in individualized and pulverulent form. In certain embodiments, said synthetic particles containing silicon, germanium and metal are present in individualized form dispersed in a liquid. In certain embodiments, said synthetic particles containing silicon, germanium and metal are present in a form agglomerated with one another and form aggregates.

In certain embodiments, the talcose composition is prepared by a process comprises subjecting a gel containing silicon, germanium and metal and having the chemical formula $-(Si_xGe_{1-x})_4M_3O_{11}{\cdot}n'(H_2O)-$ (wherein n' is a positive integer), in the liquid state, to a hydrothermal treatment carried out for a suitable period of time and a temperature of from 300°C to 600°C.

Following said hydrothermal treatment, a colloidal talcose composition may be recovered and subjected to a drying step followed by a mechanical grinding step to give a talcose composition comprising individualized mineral particles containing silicon, germanium and metal.

In certain embodiments, said gel containing silicon, germanium and metal is prepared by a co-precipitation reaction between: a liquid composition comprising at least one saline solution selected from: a sodium metasilicate ($Na_2OSiO_2$) solution and a sodium metagermanate ($Na_2OGeO_2$) solution; and having the following molar concentration ratios:

$$\frac{[Na_2OSiO_2]}{[Na_2OSiO_2]+[Na_2OGeO_2]} = x$$

and

$$\frac{[Na_2OGeO_2]}{[Na_2OSiO_2]+[Na_2OGeO_2]} = 1 - x;$$

and

a solution of metal chloride(s) ($MCl_2$) comprising at least one divalent metal chloride selected from: magnesium chloride ($MgCl_2$), nickel chloride ($NiCl_2$), cobalt chloride ($COCl_2$), zinc chloride ($ZnCl_2$), copper chloride ($CuCl_2$), manganese chloride ($MnCl_2$), iron chloride ($FeCl_2$), chromium chloride ($CrCl_2$); with a molar concentration ratio for each of said metal chlorides such that:

$$\frac{[\text{divalent metal}_{(i)}]}{[M]_{(total)}} = y(i)$$

in the presence of a hydrochloric acid solution.

In certain embodiments, the hydrothermal treatment of said gel containing silicon, germanium and metal is carried out by means of an autoclave. In certain embodiments, the hydrothermal treatment is carried out with a liquefied gel containing silicon, germanium and metal having a liquid/solid ratio of the order of 0.83; the amount of liquid being expressed in $cm^3$ and the amount of solid in grams. In certain embodiments, the hydrothermal treatment is carried out at a temperature of the order of 300°C. In certain embodiments, the hydrothermal treatment is carried out at a temperature of the order of 400°C. In certain embodiments, the hydrothermal treatment is carried out at a temperature of the order of from 500°C to 600°C. In certain embodiments, the hydrothermal treatment is carried out at a controlled pressure of the order of 16 bar. In certain embodiments, the hydrothermal treatment is carried out with stirring. In certain embodiments, in order to prepare said gel containing silicon, germanium and metal of formula $(Si_xGe_{1-x})_4M_3O_{11}\cdot n'H_2O$, the following steps are carried out in succession:

an acidic composition of metal chloride is prepared by dissolving, in one volume of water, an appropriate amount of a composition of hygroscopic crystals of at least one metal chloride selected from: magnesium chloride ($MgCl_2$), nickel chloride ($NiCl_2$), cobalt chloride ($COCl_2$), zinc chloride ($ZnCl_2$), copper chloride ($CuCl_2$), manganese chloride ($MnCl_2$), iron chloride ($FeCl_2$), chromium chloride ($CrCl_2$);

then hydrochloric acid (HCl) is added thereto;

a liquid composition is prepared by dissolving, in an appropriate volume of water, an amount of at least one salt selected from: sodium metasilicate and sodium metagermanate;

the two aqueous compositions are mixed in proportions chosen to cause the formation of a co-precipitation gel;

the amounts of the various reagents that are employed being chosen so that the $Na^+$ and $Cl^-$ ions are present in an equimolar amount following the co-precipitation reaction;

optionally wherein before the hydrothermal treatment of said gel containing silicon, germanium and metal is carried out, the gel is washed with distilled water in order to remove therefrom the sodium chloride formed during the co-precipitation reaction.

(4) synthetic talc prepared in accordance with WO-A-2012/0852391 and, the entire contents of which are hereby incorporated by reference. More particularly, a composition comprising synthetic talc mineral particles, obtainable by a process comprising: preparing a hydrogel precursor of said synthetic mineral particles, subjecting said hydrogel to a hydrothermal treatment, **characterized in that** performing at least one of said hydrothermal treatment step by adding at least one carboxylate salt in the treatment medium, said carboxylate salt having the formula R-COOM', wherein: M' is a metal selected from the group consisting of Na and K, and R is selected from H and alkyl groups having less than 10 carbon atoms. In certain embodiments, R is chosen from the group consisting of H, $CH_3$-, and -$CH_3$-$CH_2$-$CH_2$-. The temperature may be between 150°C and 600°C, for example, between 200°C and 400°C.
In certain embodiments, said precursor hydrogel is a gel containing silicon/germanium and having a formula $(Si_xGe_{1-x})_4M_3O_{11}\cdot n'H_2O$: M is at least one divalent metal having the formula $Mg_{y(1)}Co_{y(2)}Zn_{y(3)}Cu_{y(4)}Mn_{y(5)}Fe_{y(6)}Ni_{y(7)}Cr_{y(8)}$; each y(i) being a real number of the interval [0; 1], such that

$$\sum_{i=1}^{8} y(i) = 1$$

wherein x is a real number of the interval [0; 1], n' referring to a number of molecule(s) of bound water to said gel containing silicon/germanium.
In certain embodiments, the salt(s) of the formula R-COOM' is (are) added to said treatment medium such that a molar ratio of said R-COOM' to hydrogel is between 0.4 and 100. In certain embodiments, the molar ratio of R-COOM' to Si is between 0.1 and 25, based on silicon. In certain embodiments, the salt(s) of the formula R-COOM' are added to the processing medium at the beginning of the hydro thermal treatment. In certain embodiments, an amount of the salt(s) of the formula R-COOM' is added to the treatment medium so as to adjust its pH to a value between 8 and 12. In certain embodiments, the salt(s) of the formula R-COOM' are added to the treatment medium so that the concentration of the salt(s) of the formula R-COOM' in the treatment medium is between 0.2 mol/L and 10 mol/L.
In certain embodiments, the said hydrothermal treatment achieves saturation vapor pressure.
In certain embodiments, the treatment comprises lyophilization.
In certain embodiments, the hydrothermal treatment is followed by a drying step between 300°C and 600°C.
In certain embodiments, said gel is prepared by a co-precipitation reaction according to the following reaction:

$$\begin{matrix}(Na_2OSiO_2)_x \\ (Na_2OGeO_2)_{1-x}\end{matrix} + 2HCl + mH_2O + 3\begin{pmatrix} y_{(1)}(MgCl_2) + y_{(2)}(CoCl_2) + y_{(3)}(ZnCl_2) \\ + y_{(4)}(CuCl_2) + y_{(5)}(MnCl_2) + y_{(6)}(FeCl_2) \\ + y_{(7)}(NiCl_2) + y_{(8)}(CrCl_2) \end{pmatrix}$$

$$\longrightarrow [(Si_xGe_{1-x})_4M_3O_{11}, n'H_2O] + 8NaCl + (m-n'+1)H_2O$$

wherein m, n, and (m-n '+ I) are positive integers.
In certain embodiments, the gel has the formula $Si_4M_3O_{11}\cdot n'H_2O$.
In certain embodiments, the synthetic mineral particles comprise at least one non-swelling component formed of a stack of elementary layers of phyllosilicate type 2/1 having the chemical formula $(Si_xGe_{1-x})_4M_3O_{10}(OH)_2$.
In certain embodiments, said composition is **characterized in that** in an X-ray diffraction analysis of said synthetic mineral particles containing silicon, germanium and metal, a diffractogram having the following characteristic diffraction peaks is obtained: a plane (001) located at a distance of between 9.50 A and 10.25 A; a plane (020) located at a distance of between 4.50 A and 4.61 A; a plane (003) located at a distance of between 3.10 A and 3.20 A; and a plane (060) located at a distance of between 1.50 A and 1.55 A.

(5) A synthetic talc formed by the precipitation reaction of water soluble alkali metal silicate, e.g., sodium silicate, and a water soluble magnesium salt such as, for example, magnesium chloride, magnesium nitrate or magnesium sulfate.

(6) A synthetic talc prepared in accordance with international patent application PCT/FR2012/051594, the entire contents of which are hereby incorporated by reference. More particularly, a synthetic talc composition comprising synthetic mineral particles and is **characterized in that** an X-ray diffraction analysis of said talc particles yields a diffractogram having the following characteristic diffraction peaks: a peak located at 9.40-9.90 A, corresponding to a plane (001); a peak located at 4.60-4.80 A, corresponding to a plane (002); a peak located at 3.10-3.20 A, corresponding to a plane (003); a peak located at 1.51-1.53 A, corresponding to a plane (060), and wherein the intensity of a diffraction peak characteristic of a plane (002) is greater than the intensity of the corresponding signal of a plane (020), located at 4.40-4.60 A, and wherein the ratio between the intensity of a diffraction peak characteristic of a plane (001) and the intensity of a diffraction peak characteristic of a plane (003) is comprised between 0.60 and 1.50.

In certain embodiments, the synthetic mineral particles of said talc composition are phyllosilicated mineral particles displaying at least one non-swelling phase formed by a stack of elementary laminae of the 2/1 phyllogermanosilicate type and having the chemical formula $(Si_xGe_{1-x})_4M_3O_{10}(OH)_2$, and wherein x represents a real number of the interval [0; 1], and M denotes at least one divalent metal and has the chemical formula $Mg_{y(1)}Co_{y(2)}Zn_{y(3)}Cu_{y(4)}Mn_{y(5)}Fe_{y(6)}Ni_{y(7)}Cr_{y(8)}$; each y(i) representing a real number of the interval [0; 1], such that

$$\sum_{i=1}^{8} y(i) = 1 .$$

In certain embodiments, said composition is **characterised in that** in near-infrared spectroscopy, it displays a vibration band located between 5,000 $cm^{-1}$ and 5,500 $cm^{-1}$ corresponding to the presence of water bonded at the edges of the laminae.

The synthetic talc composition described under (6) above may be obtainable by a process comprising: preparing a hydrogel precursor of said synthetic mineral particles, by co-precipitation of at least one silicon-containing compound and one compound comprising at least one metallic element, and wherein said co-precipitation reaction is carried out in the presence of at least one carboxylate salt having the formula $R_2$-COOM', wherein: M' is a metal selected from the group consisting of Na and K, and $R_2$ is selected from H and alkyl groups having less than 5 carbon atoms.

In certain embodiments, said compound comprising at least one metallic element is a dicarboxylate salt having the formula $M(R_1\text{-}COO)_2$, wherein: $R_1$ is selected from H and alkyl groups having less than 5 carbon atoms, and M denotes at least one divalent metal and has the chemical formula $Mg_{y(1)}Co_{y(2)}Zn_{y(3)}Cu_{y(4)}Mn_{y(5)}Fe_{y(6)}Ni_{y(7)}Cr_{y(8)}$; each y(i) representing a real number of the interval [0; 1], such that

$$\sum_{i=1}^{8} y(i) = 1 .$$

In certain embodiments, said hydrogel is subjected to a hydrothermal treatment to obtain said synthetic mineral particles.

In certain embodiments, the co-precipitation reaction mixture of said hydrogel precursor is directly subjected to a hydrothermal treatment.

In certain embodiments, $R_1$ and $R_2$ are selected from the group consisting of $CH_3$-, $CH_3$-$CH_2$- and $CH_3$-$CH_2CH_2$-, and $R_1$ and $R_2$ are optionally identical.

In certain embodiments, the silicon-containing compound is sodium metasilicate.

In certain embodiments, said synthetic mineral particles are silicate and/or phyllosilicated mineral particles.

In certain embodiments, said precursor hydrogel is a gel containing silicon/germanium and having a formula $(Si_xGe_{1-x})_4M_3O_{11}\cdot n'H_2O$, wherein: x is a real number of the interval [0; 1], and n' refers to a number of molecule(s) of bound water to said gel containing silicon/germanium.

In certain embodiments, the salt(s) of the formula $R_2$-COOM' is (are) added to said treatment medium such that a molar ratio of $R_2$-COOM' to Si is between 0.1 and 9.

In certain embodiments, said hydrothermal treatment is carried out at a temperature between 150°C and 400°C, or between 150°C and 370°C, or between 200°C and 350°C and/or it is carried out at a pressure between 5 and 200 bar. In some embodiments, said hydrothermal treatment may be applied for 30 minutes to 30 days, such as for 1 hour to 15 days, or for 2 hours to 24 hours.

In certain embodiments in which the talc particulate is a mixture of synthetic talc and natural talc, the synthetic talc particulate may constitute a majority of the talc particulate on a weight basis, i.e., greater than about 50% by weight synthetic talc (based on the total weight of the talc particulate). In certain embodiments, the talc particulate comprises at least about 60% by weight synthetic talc with the balance natural talc, for example, at least about 70% by weight synthetic talc, or at least about 80% by weight synthetic talc, or at least about 90% by weight synthetic talc, or at least about 95% by weighty synthetic talc, or at least about 98% by weight synthetic talc, with the balance natural talc.

In certain embodiments in which the talc particulate is a mixture of synthetic talc and natural talc, the natural talc particulate may constitute a majority of the talc particulate on a weight basis, i.e., greater than about 50% by weight natural talc (based on the total weight of the talc particulate). In certain embodiments, the talc particulate comprises at least about 60% by weight natural talc with the balance synthetic talc, for example, at least about 70% by weight natural talc, or at least about 80% by weight natural talc, or at least about 90% by weight natural talc, or at least about 95% by weighty natural talc, or at least about 98% by weight natural talc, with the balance synthetic talc.

In certain embodiments, the synthetic talc is a germanium containing talc particulate, optionally obtainable by a process as described under any one of (1) to (4) or (6) above. In certain embodiments, the synthetic talc particulate is a talcose composition, optionally obtainable by a process as described under any one of (1) to (4) or (6) above.

In certain embodiments, the synthetic talc is synthetic talc prepared in accordance with (2) above in which a kerolite composition is prepared from a silicometallic gel of the formula $Si_4Mg_3O_{11}\cdot n'H_2O$, which is subjected to a hydrothermal treatment at saturation water vapour pressure and at a temperature of from 100°C to 400°C, for example, from 100°C to 350°C, or from 150°C to 325°C, or from 200°C to 300°C, or from 100°C to 240°C, for a period of from one day to three days, for example, about 2 days.

*- coating agent*

The talc particulate is coated with an electrically conducting coating agent.

As used herein, the term "electrically conducting coating agent" means a material which has an intrinsic electrical conductivity which is greater than the talc particulate which is coated with said coating agent. In certain embodiments, the electrically conducting coating agent has an electrically conductivity which is at least five orders of magnitude greater than the talc particulate, for example, at least six orders of magnitude greater, or at least seven orders of magnitude greater, or at least eight orders of magnitude greater, or at least about nine orders of magnitude greater, or at least ten orders of magnitude greater than the talc particulate which is coated with said coating agent.

As used herein, the term "coated" means the coating agent is formed on or about the surface of the particles of the talc particulate. The coating agent may be chemically bonded, e.g., covalently bonded, to the surface of the particles of the talc particulate. The coating agent may be physically adsorbed, e.g., physisorbed, or otherwise physically attached to the surface of the talc particles. In certain advantageous embodiments, the coating agent is chemically bonded, for example, covalently bonded, to the surface of the talc particles. In certain embodiments, the coating agent may be described as enveloping the talc particles.

In certain embodiments, the coating agent comprises a nanocarbon material, including, but not limited to, one or more of carbon nanotubes, graphene, fullerenes, carbon nanocones, carbon black, carbon foams and nanodiamonds.

In certain embodiments, the coating agent comprises, includes, consists essentially of, or consists of carbon nanotubes. Carbon nanotubes are fullerenes consisting essentially of sp2-hybridized carbon atoms arranged in hexagons and pentagons. The carbon nanotubes may comprise single-wall carbon nanotubes and/or multi-wall carbon nanotubes. Single-wall carbon nanotubes may be described as a rolled graphene sheet. Graphene is a single sheet of graphite composed of only sp2-hybridised carbon atoms arranged in hexagons. A multi-wall carbon nanotubes may be considered as a series of nested single-wall carbon cylinders. Carbon nanotubes may be closed at one or both ends (sometimes referred to as tips) by half-fullerene like caps containing 6 pentagons. In certain embodiments, the carbon nanotubes comprise multi-wall carbon nanotubes. In certain embodiments, the carbon nanotubes comprise single-wall carbon nanotubes. The carbon nanotubes may be formed in accordance with the methods described below.

The carbon nanotubes may have any suitable size, provided they enhance the electrical conductivity of the talc particulate. The carbon nanotubes may have a length of between about 0.1 and 1000 μm, as may be determined using a Field Emission Gun Scanning Electron Microscope (FEG-SEM). The carbon nanotubes may have a length between about 1 and 750 μm, for example, between about 1 and 500 μm, or between about 1 and 250 μm, or between about 1 and 150 μm, or between about 1 and 100 μm, or between about 10 and 100 μm, or between about 20 and 100 μm, or between about 30 and 100 μm, or between about 40 and 100 μm. It will be understood that the electrically conducting talc composition may additionally comprise carbon nanotubes having a length falling outside the dimensions described immediately above. The carbon nanotubes may have a diameter between about 5 and 50 nm, for example, between about 10 and 30 nm, as may be determined using a transmission electron microscope (TEM).

The carbon nanotubes may be present in any suitable amount provided the amount is sufficient to enhance the electrical conductivity of the talc particulate. In certain embodiments, the carbon nanotubes constitute from about 1

to about 50% by weight of the electrically conductive talc composition, for example, from about 5 to about 40% by weight, or from about 10 to about 40% by weight, or from about 14 to about 40% by weight, or from about 20 to about 40% by weight, or from about 25 to about 40% by weight, or from about 30 to about 40% by weight, or from about 1 to about 20% by weight, or from about 1 to about 15% by weight, or from about 1 to about 12% by weight, or from about 4 to about 15% by weight, or from about 4 to about 12% by weight, or from about 6 to about 10% by weight of the electrically conductive talc composition.

In embodiments in which the coating agent comprises or is carbon nanotubes the electrically conductive talc composition may comprise a catalytically active metal component, for example, one or more transition metals. The metal may be one or more of Cr, Mn, Fe, Co, Ni, Cu, Ag, Au, Pd, Pt, Rh, Ir, Mo and Nb. In certain embodiments, the metal is Fe, Co, or Ni. In certain embodiments, the metal comprises or is cobalt. The catalytically active metal component may be incorporated during manufacture of the electrically conducting talc composition, for example, by impregnation of the talc particulate, as described in greater detail below. The catalytically active metal provides sites for carbon nanotube nucleation and growth, as described in greater detail below. The catalytically active metal may be present in any suitable amount, for example, amount which is sufficient to enable growth of a desired amount of carbon nanotubes on or about the talc particles. In certain embodiments, the electrically conductive talc composition comprises from about 0.5 to about 10% by weight of catalytically active metal, based on the weight of talc particulate, for example, from about 1 to about 5% by weight, or from about 1 to about 4% by weight, or from about 1.0 to about 3.5% by weight, or from about 1.2 to about 3.2% by weight, or from about 1.4 to about 1.8% by weight, or from about 2.7 to about 3.1 % by weight catalytically active metal.

In certain embodiments, the coating agent comprises, includes, consists essentially of, or consists of an electrically conducting polymeric material. The electrical conductivity of the polymeric material is derived from a conjugated system of p-orbitals with delocalized electrons (also known as intrinsically conducting polymers). In certain embodiments, the electrically conducing polymeric material comprises one or more of polypyrrole, polycarbazole, polyindole, polyazepine, polyaniline, polythiophene, poly(3,4,-ethylenedioxythiophene), poly(p-phenyl sulphide), polyacetylene, poly(p-phenylene vinylene), polyfluorene, polyphenylene, polypyrene, polyazulene, polynaphthalene, copolymers thereof, and mixtures thereof.

Chemical structures of some conductive polymers are depicted below:

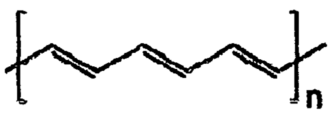

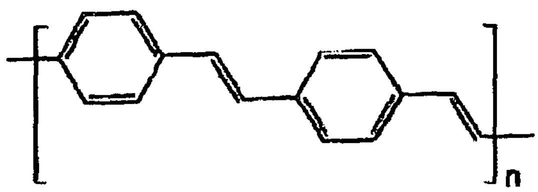

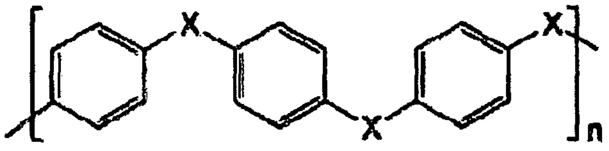

(X = NH/N, S)

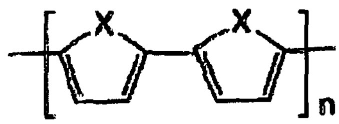

(X = NH, S)

In certain embodiments, the electrically conducting polymeric material comprises one or more of polypyrrole, polyaniline, polythiophene, pofy(3,4,-ethylenedioxythiophene), polyacetylene, poly(p-phenylene vinylene), poly(p-phenyl sulphide).

In advantageous embodiments, the electrically conducting polymeric material comprises or is polypyrrole.

The electrically conducting polymeric material may be present in any suitable amount provided the amount is sufficient to enhance the electrical conductivity of the talc particulate. In certain embodiments, the electrically conductive polymeric material comprises from about 1 to about 50% by weight of the electrically conductive talc composition, for example, from about 5 to about 40% by weight, or from about 10 to about 40% by weight, or from about 14 to about 40% by weight, or from about 20 to about 40% by weight, or from about 25 to about 40% by weight, or from about 30 to about 40% by weight of the electrically conductive talc composition.

In certain embodiments in which the coating agent comprises or is an electrically conducting polymeric material, for example, certain embodiments in which the talc particulate comprises or is natural talc particulate, at least a portion of the polymeric material is connected to the surface of the talc particulate via a chemical linker moiety. In certain embodiments, the chemical linker moiety is chemically bonded, e.g., covalently bonded, to the surface of the talc particles and the electrically conducting polymeric material. When present, the chemical linker moiety may be described as being grafted, for example, covalently grafted, onto the surface of the talc particles.

In certain embodiments, the chemical linker moiety is of the form X-Y-Z in which X is chemical group which has an affinity for the surface of the talc particles, Z is a group which will form a chemical bond with the electrically conductive polymeric material, and Y is a chemical moiety that links X and Z. The term "affinity" relates to chemical moieties that are either chemically bonded or physically adsorbed (physisorbed) to the particle surface. Advantageously, X is chemically bonded, e..g., covalently bonded, to the particle surface.

X may be, for example, an alkoxysilane group, for example, a tri-alkoxysilane, such as tri-ethoxysilane or tri-methoxysilane, which is particularly useful when the particles having silanol (SiOH) groups on their surface). X may be, for example, a silanetriol ($Si(OH)_3$) group. X may also be, for example, an acid group (such as a carboxylic acid or an acrylic acid group) which is particularly useful when the particles have basic groups on their surface.

Y may be any chemical group that links X and Z together, for example, a polyamide, a polyester, or an alkylene chain. Advantageously, Y is an alkylene chain, for example, a $C_{2-6}$ alkylene chain, such as ethylene, propylene or butylene.

Z may be, for example, an epoxy group, a carboxylic acid group, an unsaturated hydrocarbon such as acrylic or vinyl, or an amine group. Advantageously, Z is an amine. As noted above, in particular embodiments, Z is of form which is suitable to chemically bond with the electrically conductive polymeric material.

Exemplary chemical linker moieties may be selected from trimethoxysilyl ethyl amine, triethoxysilyl ethyl amine, tripropoxysilyl ethyl amine, tributoxysilyl ethyl amine, trimethoxysilyl propyl amine, triethoxysilyl propyl amine, tripropoxysilyl propyl amine, triisopropoxysilyl propyl amine, tributoxysilyl propyl amine, trimethoxysilyl butyl amine, triethoxysilyl butyl amine, tripropoxysilyl butyl amine, tributoxysilyl butyl amine, trimethoxysilyl pentyl amine, triethoxysilyl pentyl amine, tripropoxysilyl pentyl amine, tributoxysilyl pentyl amine, trimethoxysilyl hexyl amine, triethoxysilyl hexyl amine, tripropoxysilyl hexyl amine, tributoxysilyl hexyl amine, trimethoxysilyl heptyl amine, triethoxysilyl heptyl amine, tripropoxysilyl heptyl amine, tributoxysilyl heptyl amine, trimethoxysilyl octyl amine, triethoxysilyl octyl amine, tripropoxysilyl octyl amine, tributoxysilyl octyl amine, silanetriol ethyl amine, silanetriol propyl amine, silanetriol butyl amine, silanetriol pentyl amine, silanetriol hexyl amine, silanetriol heptyl amine, silanetriol octyl amine, and mixtures thereof.

In advantageous embodiments, the chemical linker moiety is trimethoxysilyl propyl amine.

In other advantageous embodiments, the chemical linker moiety is silanetriol propyl amine.

In one embodiment, the talc particulate is reacted with a suitable chemical linker moiety, in amount in the range of from about 0.1 to about 30% of the linker molecule based on the weight of the talc particulate, for example, in the range of from about 0.1 to about 20%, or from about 0.1 to about 10% by weight, or from about 0.1 to about 5% by weight, or from about 0.1 to about 1% by weight.

*Preparative methods for making electrically conducting talc composition*

In embodiments in which the coating agent comprises or is carbon nanotubes, the electrically conducting talc composition is made by method comprising forming carbon nanotubes on particles of the talc particulate. Suitable carbon nanotubes forming techniques include catalytic chemical vapour deposition (CCVD) using carbon-containing feedstocks and catalytic metal particles, gas-phase synthesis from high temperature, high pressure carbon monoxide, laser ablation, arc-discharge method, or any other suitable method.

In certain embodiments, forming carbon nanotubes on particles of talc is carried out by catalytic vapour deposition using carbon-containing feedstocks and catalytic metal particles. Thus, in an exemplary embodiment, the method comprises impregnating talc particles of the talc particulate with catalytic metal particles, followed by carbon nanotube formation by CCVD using a carbon-containing feedstock, for example, ethylene. Other suitable feedstocks include one or more of methane, acetylene benzene, toluene, xylene, as well as other compounds including, but not limited, to alcohols, such as ethanol and methanol.

Impregnation of talc particles of the talc particulate may be carried out using any suitable method. In certain embodiments, the talc particulate is combined with a salt solution of the catalytic metal, e.g., an aqueous or organic (e.g., methanol, ethanol, acetone, ether) solution of cobalt nitrate. In certain embodiments, the talc particulate is combined with an aqueous solution of the catalytic metal. The relative amounts of catalytic metal and talc particulate are selected in order to obtain an electrically conducting talc composition as described in certain embodiments above. The weight ratio of metal salt to talc particulate may range from about 1:1 to about 1:20 (on a dry weight basis), for example, from about 1:5 to about 1:15. The talc particulate may be added slowly to the salt solution under vigorous stirring to obtain a homogenous suspension. For example, the mixture of salt solution and talc particulate may be agitated, e.g., stirred, for a period of up to about 2 hours Agitation, e.g., stirring, may be carried out using ultrasonic means and other high speed mixing means, for example, a magnetic stirrer.

The resultant suspension may be dried and milled prior to calcination at a suitable temperature, for example, at a temperature of between about 100 and 300°C, for example, at a temperature of between about 200 and 300°C, for example, between about 230 and 270°C, for a suitable period of time, e.g., up to about 5 hours or, for example, between about 2 and 4 hours. Drying may be conducted in a drying oven. Other drying methods include, but are not limited to, freeze-drying or treatment with a rotary evaporator.

The calcined material may be subjected to an optional reducing step prior to a carbon nanotubes growth and formation step. The reducing step is conducted in reducing atmosphere, for example, reduction under hydrogen gas, at an elevated temperature for a suitable period of time. Reduction may be carried out in a furnace, for example, a tube furnace. A suitable thermal cycle may be applied including raising the temperature over a period of time to a final temperature of up to about 800°C, for example, a final temperature of between about 650 and 750°C. Heating rates may be from about 1 to about 15°C per minute, for example, for example, about 5°C per minute, or about 10°C per minute. The amount of reducing gas, e.g., hydrogen will be sufficient to reduce the talc particulate impregnated with catalytic metal. The calcined material may be held at the final temperature for a suitable period of time, for example, between about 1 and 5 hours, for example, between about 2 and 4 hours, of between about 2.5 and 3.5 hours. Following heating at the maximum temperature, the reduced material is allowed to cool, e.g., by switching off the furnace. Cooling may be effected under nitrogen. The reduced material may be removed from the furnace when the temperature of the furnace is less than about 100°C, for example, equal to or below about 80°C. Gas flow during heating and cooling may be measured with an appropriate flow meter, for example, a mass flowmeter or a ball flow meter.

In embodiments in which the calcined material is reduced prior to a carbon nanotube growth and formation step, the reduced material is then subjected to CCVD under suitable conditions to obtain carbon nanotubes formed on talc particles of the talc particulate. Any suitable carbon-feedstock may be used. Suitable carbon-feedstocks include, but are not limited to, ethylene, methane, acetylene benzene, toluene, xylene, as well as other compounds, such as for example, alcohols, e.g., ethanol and/or methanol. In certain embodiments, the carbon-containing feedstock comprises or is ethylene. Under CCVD conditions the ethylene (or other carbon-feedstock) decomposes at catalytic metal sites on the talc particles, which serve as nucleation centres for the growth of carbon nanotubes. Carbon nanotubes growth may be carried out in any suitable furnace, for example, a tube furnace. An exemplary thermal cycle may be the following:

(i) raising the temperature under $N_2$ gas from room temperature (e.g., about 20°C) to about 600°C at a heating rate of from about 5 to 15°C per minute, for example, a heating rate of about 10°C per minute;
(ii) raising the temperature from 600°C to about 700°C at a heating rate of about 5°C per minute;
(iii) maintaining for 1 hour at 700°C under $C_2H_4$ (2-5 L per hour) diluted in $N_2$ (8-12 L per hour);
(iv) cooling (switching off the furnace) under $N_2$ (8-12 L per hour) for 30 minutes, then at 1-3 L per hour $N_2$ until the furnace has reached a temperature of about 80°C or less; and
(v) removing the talc material from the furnace.

Thus, in certain embodiments, manufacture of the electrically conducing talc composition comprises:

(i) impregnation of the talc particulate with a salt solution of catalytic metal by combining and stirring talc particulate and a salt solution of catalytic metal to obtain a homogenous suspension;
(ii) drying the suspension;
(iii) calcination of the dried material;
(iv) reducing the calcined material under a reducing atmosphere;
(v) subjecting the reduced material to CCVD under conditions to obtain carbon nanotubes formed on talc particles of the impregnated talc particulate.

As described above, reduction of the calcined material and carbon nanotube growth and formation may be carried out in one step, i.e., the same thermal cycle.

Thus, in certain embodiments, an exemplary thermal cycle is the following:

(i) raising the temperature under $H_2$ gas (4-7 L per hour) from room temperature (e.g., about 20°C) to about 600°C at a heating rate of from about 5 to 15°C per minute, for example, a heating rate of about 10°C per minute;
(ii) raising the temperature from 600°C to about 700°C at a heating rate of about 5°C per minute;
(iii) maintaining for 4 hours at 700°C with 3 hours under $H_2$ (4-7 L per hour) and with 1 hour under $C_2H_4$ (2-5 L per hour) diluted in $N_2$ (8-12 L per hour);
(iv) cooling down (switching off the furnace) under $N_2$ (8-12 L per hour) for 30 minutes, then at 1-3 L per hour $N_2$ until the furnace has reached a temperature of about 80°C or less; and
(v) removing the talc material from the furnace.

Thus, in certain embodiments, manufacture of the electrically conducing talc composition comprises:

(i) impregnation of the talc particulate with a salt solution of catalytic metal by combining and stirring talc particulate and a salt solution of catalytic metal to obtain a homogenous suspension;
(ii) drying the suspension;

(iii) calcination of the dried material;

(iv) reducing the calcined material under a reducing atmosphere and subjecting it to CCVD under conditions to obtain carbon nanotubes formed on talc particles of the impregnated talc particulate.

In embodiments in which the coating agent comprises or is an electrically conducting polymeric material, the electrically conducting talc composition is prepared by a method comprising forming said electrically conducting polymer material on or about talc particles of the talc particulate.

The talc particulate may be combined with a pre-formed electrically conducting polymeric material, or advantageously, the electrically conducting talc composition may be formed by *in situ* polymerisation of the electrically conducting polymeric material on or about the talc particles in the presence of the talc particulate. In such methods, appropriate polymer precursors, e.g., monomers, are selected depending on the desired form of the electrically conducting polymeric material, e.g., if the electrically conducing polymeric mater is polypyrrole, the polymer precursor (i.e., monomer) is pyrrole. Polymerisation may be effected using conditions which are appropriate for the electrically conducting polymeric material.

In certain embodiments, the *in-situ* polymerization process is an oxidative polymerization process, for example, in the case of monocyclic precursors such as pyrrole, oxidative coupling of monocyclic precursor. The oxidant may be any suitable chemical entity such, as for example, a metal salt oxidant, e.g., $FeCl_3$. The metal component acts as the oxidant, oxidising the monocyclic precursor, e.g., pyrrole. The oxidant may also act as a dopant.

*In situ* polymerization may be carried out under aqueous or non-aqueous conditions (depending on the monomer to be oxidized) and at temperature below room temperature, for example, a temperature of less than about 10°C, or less than about 5°C, or less than about 2°C, or less than about 1°C. In certain embodiments, polymerization is carried out at about 0 °C. In certain embodiments, the talc particulate and monocyclic precursor are added to an aqueous solution.

Suitable non-aqueous mediums include acetonitrile, dicholoromethane, nitromethane, nitrobenzene, propylene carbonate, dichloroethane, N-methyl-pyrrole, dimethylformamide, dimethylsulfoxide, and mixtures thereof.

The aqueous solution may further comprise an electrolyte including, but not limited to, alkylsulfonic acid, arylsulfonic acid, alkycarboxyllic acid, and polystyrenesulfonic acid.

Since polymerization of the monomer is to be effected about the talc particles of the talc particulate, it is advantageous to maintain the talc particulate in suspension during the polymerization process. Thus, the aqueous solution comprising talc particulate and monomer may be agitated at high speed during *in situ* polymerization. The talc particulate may be added prior to addition of the polymer precursor. Any suitable mixing means may be used to mix and agitate the combination of monomer and talc particulate, for example, a high speed mixer comprising a rotating mixing blade capable of operating at speeds of up to about 5000 rpm, or up to about 10,000 rpm. An exemplary mixer is a high speed mixer made by Henchel. Other suitable high speed mixers include a Rotor/stator mixer, a RV02E intensive mixer (from Maschinenfabrik Gustav Eirich GmbH & Co KG), Ystral™, Ultra Turrax™ or Steele and Cowlishaw high intensity mixer.

During agitation the oxidant is added to the reaction mixture to initiate polymerization. The oxidant may be added in continuously or in batches, e.g., dropwise, followed by further mixing/stirring/agitation for a suitable period of time. Following addition of oxidant the reaction mixture may be stirred for up to about 10 hours, for example, up to about 7 hours, or up to about 5 hours, or up to about 4 hours. The stirring speed may be reduced following oxidant addition. For example, stirring for the last 1-3 hours may be conducted using a magnetic stirrer.

Following polymerization, the resultant polymer coated talc particulate may be washed, e.g., with water, and optionally freeze dried.

The polymer precursor may be purified prior to polymerization. For example, the polymer precursor may be purified by distillation, e.g., "trap-to-trap" distillation, under vacuum. The polymer precursor may be stored at low temperature, e.g., under liquid nitrogen, to prevent precursor degradation.

In accordance with certain embodiments described above, the talc particulate may have chemical linker moiety attached or connected to the surface of talc particles of the talc particulate. Thus, in certain embodiments of the method described above, the talc particulate comprises talc particles having chemical linker moieties connected thereto, e.g., covalently bonded to the surface of the talc particles. Without wishing to be bound by theory, it is believed that the provision of a chemical linker moiety, particularly of a form which can chemically bond, e.g., covalently bond, to the surface of the talc particles and the polymerizing species, e.g., polypyrrole, enhances the homogeneity of the electrically conducting talc composition which, in turn, may enhance the electrical conductivity properties of functional compositions comprising the electrically conducting talc composition.

The chemical linker moiety may be any of the moieties described above in connection with certain embodiments of the present invention.

Talc particulate having the chemical linker moiety may be prepared by combining the chemical linker moiety and talc particulate under suitable conditions to produce talc particulate comprising talc particles having chemical linker moieties attached thereto, e.g., covalently bonded. Depending on the chemical linker moiety, combining may be effected under anhydrous and inert conditions (i.e., in the absence of water), or under aqueous conditions. For example, if the

chemical linker moiety is one in which X is an alkoxysilane group, the method of preparation may be carried out under anhydrous and inert conditions, for example, by combining the talc particulate and chemical linker moiety in an anhydrous solvent, such as anhydrous toluene, and under a nitrogen atmosphere. If, for example, the chemical linker moiety is one in which X is a silanetriol ($Si(OH)_3$) group, the method of preparation may be carried out under aqueous conditions, optionally at room temperature. In either preparative method, the talc particulate and chemical linker moiety will be stirred for a suitable period of time to allow the chemical linker moiety to attach, e.g., covalently bond, the surface of talc particles in the talc particulate. Stirring may be effected for a period of time of from about 12 hours to about 4 days, for example, from about 24 to about 84 hours, or from about 36 hours to about 78 hours, or up to about 48 hours, or up to about 72 hours.

Following the combining step, the resultant product may be separate from the solvent, for example, by centrifugation, followed by washing, and optionally freeze-drying. Washing may be effected with a non-aqueous solvent or water, depending on whether the combining step necessitated water-free conditions, as described above. Suitable non-aqueous washing solvents include ethanol, acetone, and the like. When a non-aqueous solvent is used, drying may be carried out under vacuum for a suitable period of time to remove solvent. When an aqueous solvent is used, i.e., water, used for washing, drying may be carried by evaporation or freeze drying.

*Functional compositions and preparative methods*

The electrically conducting talc composition of the present invention may be used as a filler in a functional composition. As used herein, the term "functional composition" means a composition of matter which is formulated to meet the needs of a specific application.

In certain embodiments, the electrically conducting talc composition is used as a functional filler in a functional composition, for example, to modify enhance or modulate one or more electrical, physical, mechanical, thermal or optical properties of the functional composition. In certain embodiments, the electrically conducting talc composition is used as a functional filler in a functional composition to modify, enhance or modulate the electrical conductivity of the functional composition.

The functional composition comprising the electrically conducting talc composition may be a polymer composition, a paper composition, a paint composition, a ceramic composition, or a coating composition.

In certain embodiments, the functional composition comprises from about 5 to about 80% by weight of the electrically conducting talc composition, based on the total weight of the functional composition, for example, from about 10 to about 80% by weight, or from about 10 to about 70% by weight, or from about 20 to about 60% by weight, or from about 25 to about 50% by weight, or from about 30 to about 50% by weight, or from about 30 to about 45% by weight, or from about 30 to about 40% by weight, or from about 35 to about 45% by weight of the electrically conducting talc composition. In certain embodiments, the functional composition comprises at least about 10% by weight of the electrically conducting talc composition, based on the total weight of the functional composition, for example, at least about 20% by weight, or at least about 25% by weight, or at least about 30% by weight, or at least about 35% by weight, or at least about 37% by weight, or at least about 40% by weight, or at least about 45% by weight, or at least about 50% by weight, or at least about 55% by weight of the electrically conducting talc composition.

The functional composition may comprise filler compounds other than the electrically conducting talc composition including, but not limited to, an alkaline earth metal carbonate or sulphate, such as calcium carbonate, magnesium carbonate, dolomite, gypsum, a hydrous kandite clay such as kaolin, halloysite or ball clay, an anhydrous (calcined) kandite clay such as metakaolin or fully calcined kaolin, mica, perlite, feldspars, nepheline syenite, wollastonite, diatomaceous earth, barite, glass, and natural or synthetic silica or silicates. Any of the aforementioned additional filler compounds may be coated in accordance with the methods described herein.

The functional compositions of the present invention can be made by any suitable method known in the art, as will be readily apparent to one of ordinary skill in the art. The functional composition can be prepared by mixing of the components thereof intimately together. The said electrically conducting talc compositon may then be suitably blended, e.g., dry blended, with the mixture of components and any desired additional components, before processing to form a final functional composition or article in a conventional manner. Certain of the ingredients can, if desired, be premixed before addition to the mixture.

*- polymer composition*

In certain embodiments, the functional composition is a polymer composition. The polymer composition may comprise any natural or synthetic polymer or mixture thereof. The polymer may, for example, be thermoplastic or thermoset. The term "polymer" used herein includes homopolymers and/or copolymers, as well as crosslinked and/or entangled polymers.

The term "precursor" as may be applied to the polymer component will be readily understood by one of ordinary skill in the art. For example, suitable precursors may include one or more of: monomers, cross-linking agents, curing

systems comprising cross-linking agents and promoters, or any combination thereof. Where, according to the present invention, the electrically conducting talc composition is mixed with precursors of the polymer, the polymer composition will subsequently be formed by curing and/or polymerising the precursor components to form the desired polymer.

Polymers, including homopolymers and/or copolymers, comprised in the polymer composition of the present invention may be prepared from one or more of the following monomers: acrylic acid, methacrylic acid, methyl methacrylate, and alkyl acrylates having 1 to 18 carbon atoms in the alkyl group, styrene, substituted styrenes, divinyl benzene, diallyl phthalate, butadiene, vinyl acetate, acrylonitrile, methacrylonitrile, maleic anhydride, esters of maleic acid or fumaric acid, tetrahydrophthalic acid or anhydride, itaconic acid or anhydride, and esters of itaconic acid, with or without a cross-linking dimer, trimer, or tetramer, crotonic acid, neopentyl glycol, propylene glycol, butanediols, ethylene glycol, diethylene glycol, dipropylene glycol, glycerol, cyclohexanedimethanol, 1,6-hexanediol, trimethyolpropane, pentaerythritol, phthalic anhydride, isophthalic acid, terephthalic acid, hexahydrophthalic anyhydride, adipic acid or succinic acids, azelaic acid and dimer fatty acids, toluene diisocyanate and diphenyl methane diisocyanate.

The polymer may be selected from one or more of polmethylmethacrylate-(PMMA), polyacetal, polycarbonate, polyvinyls, polyacrylonitrile, polybutadiene, polystyrene, polyacrylate, polyethylene, polypropylene, epoxy polymers, unsaturated polyesters, polyurethanes, polycyclopentadienes and copolymers thereof. Suitable polymers also include liquid rubbers, such as silicones.

In certain embodiments, the polymer(s) of the polymer composition is (are) inherently electrically non-conducting, i.e., an insulator. As used herein, the term "inherently electrically non-conducting means the polymer does not comprise a conjugated system of p-orbitals and delocalized electrons permitting electrical conduction.

The polymers which may be used in accordance with the invention are advantageously thermoplastic polymers. Thermoplastic polymers are those which soften under the action of heat and harden again to their original characteristics on cooling, that is, the heating-cooling cycle is fully reversible. By conventional definition, thermoplastics are straight and branched linear chain organic polymers with a molecular bond. Examples of polymers which may be used in accordance with the invention include, but are not limited to polyethylene, for example, linear low density polyethylene (LLDPE) and medium density grades thereof, high density polyethylene (HDPE), low density polyethylene (LDPE), polypropylene (PP), polyethylene terephthalate (PET), vinyl/polyvinyl chloride (PVC), polystyrene, and mixtures thereof.

In certain embodiments, the polymer is a polyalkylene polymer, for example, polyethylene, polypropylene, polybutylene, or a copolymer of two or more of ethylene, propylene and butylenes monomers, for example, an ethylene-propylene copolymer. In certain embodiments, the polymer is a mixture of two or more of propylene, polyethylene and ethylene-propylene copolymer, for example a mixture of propylene and polyethylene.

In certain embodiments, the polymer comprises, consists essentially of, or consists of polypropylene or polyethylene or a mixture of polypropylene and polyethylene.

In certain embodiments, the polymer composition does not comprise, contain or include polypropylene and/or the polymer composition does not comprise an electrically conducting talc composition in which the talc particulate is natural talc and the coating agent is carbon nanotubes.

In certain embodiments, the polymer composition has semi-conducting properties. In certain embodiments, the polymer compositon has metallic conducting properties.

The polymer composition can be prepared by mixing of the components thereof intimately together. The said electrically conducting talc composition may then be suitably dry blended with the polymer and any desired additional components, before processing as described above.

For the preparation of cross-linked or cured polymer compositions, the blend of uncured components or their precursors, and, if desired, the electrically conducting talc composition and any desired non-talc component(s), will be contacted under suitable conditions of heat, pressure and/or light with an effective amount of any suitable cross-linking agent or curing system, according to the nature and amount of the polymer used, in order to cross-link and/or cure the polymer.

For the preparation of polymer compositions where the electrically conducting talc composition and any desired other component(s) are present in situ at the time of polymerisation, the blend of monomer(s) and any desired other polymer precursors, electrically conducting talc composition and any other component(s) will be contacted under suitable conditions of heat, pressure and/or light, according to the nature and amount of the monomer(s) used, in order to polymerise the monomer(s) with the surface treated high aspect ratio talc and any other component(s) in situ.

In certain embodiments, the electrically conducting talc composition is dispersed with agitation into a mixture comprising polymer (for example, polyethylene) and optionally a curing agent. The mixture may further comprise a mould release agent.

The resulting dispersion can be degassed to remove entrained air. The resulting dispersion can then be poured into a suitable mould and cured. Suitable curing temperatures range from 20-200°C, for example 20-120°C, or, for example, 60-90°C.

The starting polymer mixture can further comprise a pre-polymer (for example, propylene monomer). The pre-polymer may or may not correspond to the starting polymer.

The viscosity of the starting polymer or polymer/monomer solution, amount of curing agent, release agent and surface treated high aspect ratio talc can be varied according to the requirements of the final cured product. Generally, the greater the amount of surface treated high aspect ratio talc added, the higher the viscosity of the dispersion.

Dispersant agents can be added to reduce the viscosity of the dispersion. Alternatively, the amount of polymer in the starting solution can be reduced.

Suitable curing agents will be readily apparent to one of ordinary skill in the art, and include organic peroxides, hydroperoxides and azo compounds. Examples of peroxide and hydroperoxide curing agents include dimethyl dibutylperoxyhexane, benzyl peroxide, dicumyl peroxide, methyl ethyl ketone peroxide, lauryl peroxide, cyclohexanone peroxide, t-butyl perbenzoate, t-butyl hydroperoxide, t-butyl benzene hydroperoxide, cumene hydroperoxide and t-butyl peroctoate.

The compounded compositions may further comprise additional components, such as slip aids (for example Erucamide), process aids (for example Polybatch® AMF-705), mould release agents and antioxidants.

Suitable mould release agents will be readily apparent to one of ordinary skill in the art, and include fatty acids, and zinc, calcium, magnesium and lithium salts of fatty acids and organic phosphate esters. Specific examples are stearic acid, zinc stearate, calcium stearate, magnesium stearate, lithium stearate calcium oleate, zinc palmitate. Typically, slip and process aids, and mould release agents are added in an amount less than about 5 wt.-% based on the weight of the masterbatch. Polymer articles, including those described above, may then be extruded, compression moulded or injected moulded using conventional techniques known in the art, as will be readily apparent to one of ordinary skill in the art. Thus, as described below, the present invention is also directed to articles formed from the polymer compositions of the present invention.

In certain embodiments, the polymer composition comprises a colorant which, if present, will be added during compound of the polymer composition. The colorant may be added in the form of a masterbatch. Suitable colours are many and various.

In certain embodiments, the process includes the step of mixing or blending a electrically conducting talc composition in an amount of greater than about 10% by weight with a pre-formed polymer. For example, the electrically conducting talc composition may be added to a twin-screw extruder to which unfilled polymer is being fed and made molten. The electrically conducting talc composition is fed into the extruder through a hopper, for example, via gravimetric feeding, and uniformly blends with the polymer. The mixture emerges from the extruder and may be cooled. Then, for example, the mixture can be further compression moulded or injection moulded into useful shapes.

In certain embodiments, the process includes preparing a solution of the polymer and electrically conducing talc composition, followed by extrusion. The solution may comprise a solvent in which the polymer substantially dissolves. The electrically conducting talc composition may first be dispersed in the solvent, for example, by vigorous shaking and/or agitating/stirring a mixture of the solvent and the electrically conducting talc composition for a suitable period of time, for example, from about 1 minute to about 1 hour, for example, from about 5 minutes to about 30 minutes, or from about 5 minutes to about 15 minutes. Agitation may be carried out using ultrasonic means and other high speed mixing means, including those described above. The polymer is then added to the dispersion with further mixing. Heat may be applied to facilitate the dissolving of the polymer. Mixing/heating is carried out for a suitable period of time to substantially dissolve the polymer in the dispersion, from about 1 minute to about 1 hour, for example, from about 5 minutes to about 45 minutes, or from about 10 minutes to about 30 minutes. The solvent is then typically removed, e.g., by evaporation, following by drying, optionally under vacuum. The resulting mixture may then be extruded, as described below.

In certain embodiments, the blend of polymer and electrically conducting talc composition is extruded and the further processed into a film using conventional apparatus, for example, a hot press.

The methods described above may include compounding and extrusion. Compounding may be carried out using a twin screw compounder, for example, a HAAKE MiniLab twin screw compounder, or a Clextral BC 21 double screw extruder, or a Leistritz ZSE 18 double screw extruder (having an appropriate length/diameter ratio), or Baker Perkins 25 mm twin screw compounder. The polymer, electrically conducting talc composition and optional additional components may be premixed and fed from a single hopper. The resulting melt may be cooled, for example, in a water bath, and then pelletized.

The screw temperature may be between about 100°C and about 300°C, for example, between about 100°C and about 200°C, for example, between about 100°C and about 160°C, or between about 120°C and 160°C.

Screw speed may be between about 10 and 1000 rpm, for example, between about 200 and 800 rpm, for example, between about 250 and 650 rpm, for example, between about 200 and 400 rpm, or between about 500 and 700 rpm. In certain embodiments, screw speed is less than about 300 rpm. In other embodiments, screw speed is between about 10 and 100 rpm, for example, between about 20 and 70 rpm.

Suitable injection molding apparatus includes, for example, a Billion 50T Proxima press. The polymer composition may be dried prior to molding. Drying may be carried out any suitable temperature, for example, about 60°C, for a suitable period of time, for example, between about 1 hours and 20 hours, for example, between about 2 and 18 hours, or between about 1 and 3 hours, or between about 4 and 8 hours, or between about 12 and 18 hours. The temperature during drying may be kept constant or varied. In certain embodiments, the temperature during drying is between about

70 and 120°C, for example, between about 80 and 100°C, for example, about 90°C.

Molding is generally conducted at a temperature at which the polymer composition is flowable. For example, the molding temperature may be between about 100 and 300°C, for example, between about 200 and 300°C, or between about 240 and about 280°C. Following molding the molded piece will be allowed to cool and set.

Other suitable processing techniques include gas-assisted injection molding, calendaring, vacuum forming, thermoforming, blow-molding, drawing, spinning, film forming, laminating or any combination thereof. Any suitable apparatus may be used, as will be apparent to one of ordinary skill in the art.

The polymer composition can be processed to form, or to be incorporated in, articles of commerce in any suitable way, as described herein. The articles which may be formed from the polymer composition are many and various. Examples include electrically conducting polymer films, e.g., thin films, and the like. Other examples include applications in which an electrically conductive polymer is required to prevent damage or explosion risk from static electrical charge dissipation, for example, fuel linings, hoses, and filler caps, or electronic packaging applications.

*- paint composition*

Paint compositions typically comprise primary pigment, optional extender pigment, solvent and binder, and other optional additives suitable for use in paint, as well as the electrically conducting talc composition of the present invention.

A primary pigment is that which provides the primary colouration of a paint, whether white or a colour shade. The term includes finely ground, natural or synthetic, inorganic or organic, insoluble dispersed particles which, when dispersed in a liquid vehicle, i.e., solvent, may provide, in addition to colour, many of the desired properties of paint, such as opacity, hardness, durability and corrosion resistance. Extender pigments are the filler used in paints. Extender pigments generally do not hide as well as primary pigments and their presence may affect the overall characteristics and performance of a paint. Primary pigment is generally more expensive than extender pigment.

Suitable primary pigment include, but are not limited to, titanium dioxide, carbon black, calcium sulphate, iron oxide, and the copper-complex phthalo blue. Other suitable primary pigments for providing colour will be readily apparent to persons skilled in the art.

Extender pigments include, but are not limited to, an alkaline earth metal carbonate or sulphate, such as calcium carbonate, magnesium carbonate, dolomite, gypsum, a hydrous kandite clay such as kaolin, halloysite or ball clay, an anhydrous (calcined) kandite clay such as metakaolin or fully calcined kaolin, mica, perlite, feldspars, nepheline syenite, wollastonite, diatomaceous earth, barite, glass, and natural or synthetic silica or silicates. The paint composition may include one or more or a mixture of the aforementioned extender pigments.

The paint may be formulated as a decorative paint, including matt and gloss paints, an industrial paint, including protective paints and paints for sanitation, and the like, and other paints such as paints for identification, e.g., signage, and the like.

The paint composition may be formulated for application to a variety of different materials, such as metal, wood, fibreglass, concrete or plastic.

The solvent is any suitable substance which can act as a carrier for the pigment and binder. Once on the substrate being painted, the solvent evaporates through drying and/or curing and leaves behind a dry paint film on the painted substrate. In one embodiment, the solvent comprises water and optional dispersing chemicals. Organic solvents include mineral spirits, e.g., white sprits, petroleum distillate, esters, glycol ethers, and the like.

The paint composition may be formulated for application by brush, pad, roller or by spraying.

The paint compositions of the present invention may be prepared in accordance with conventional methods known in the art. This comprises combining, e.g., mixing, and processing paint components in appropriate amounts (depending on the desired paint composition) and under suitable conditions to obtain a paint composition. The paint components may be processed by milling or in a high-speed dispersion tank in which the premixed components are subjected to high-speed agitation by a circular, toothed blade attached to a rotating shaft. The processed composition is then typically thinned by agitation with a suitable amount of solvent for the type of paint desired to produce the final paint product.

*- papermaking composition*

The electrically conducting talc composition may be incorporated in papermaking compositions, which in turn can be used to prepare paper products. The term "paper product", as used in connection with the present invention, should be understood to mean all forms of paper, including board such as, for example, white-lined board and linerboard, cardboard, paperboard, coated board, and the like. There are numerous types of paper, coated or uncoated, which may be made according to the present invention, including paper suitable for books, magazines, newspapers and the like, and office papers. The paper may be calendered or super calendered as appropriate; for example super calendered

magazine paper for rotogravure and offset printing may be made according to the present methods. Paper suitable for light weight coating (LWC), medium weight coating (MWC) or machine finished pigmentisation (MFP) may also be made according to the present methods. Coated paper and board having barrier properties suitable for food packaging and the like may also be made according to the present methods.

The paper-making compositions of the present invention may be prepared in accordance with conventional methods known in the art. This comprises combining, e.g., mixing, and processing paper-making components in appropriate amounts (depending on the type of paper) and under suitable conditions to obtain a paper-making composition.

In a typical papermaking process, a cellulose-containing pulp is prepared by any suitable chemical or mechanical treatment, or combination thereof, which are well known in the art. The pulp may be derived from any suitable source such as wood, grasses (e.g., sugarcane, bamboo) or rags (e.g., textile waste, cotton, hemp or flax). The pulp may be bleached in accordance with processes which are well known to those skilled in the art and those processes suitable for use in the present invention will be readily evident. The bleached cellulose pulp may be beaten, refined, or both, to a predetermined freeness (reported in the art as Canadian standard freeness (CSF) in $cm^3$). A suitable paper stock is then prepared from the bleached and beaten pulp.

The papermaking composition of the present invention typically comprises, in addition to the electrically conducting talc composition, paper stock and other conventional additives known in the art. The papermaking composition of the present invention may comprise up to about 50% by weight of the electrically conducting talc composition, based on the total dry contents of the papermaking composition. For example, the papermaking composition may comprise at least about 2% by weight, or at least about 5% by weight, or at least about 10% by weight, or at least about 15% by weight, or at least about 20% by weight, or at least about 25% by weight, or at least about 30% by weight, or at least about 35% by weight, or at least about 40% by weight, or at least about 45% by weight, or at least about 50% by weight, or at least about 60% by weight, or at least about 70% by weight, or at least about 80% by weight of electrically conducting talc composition. The papermaking composition may also contain a nonionic, cationic or an anionic retention aid or microparticle retention system in an amount in the range from about 0.1 to 2% by weight, based on weight of the electrically conducting talc composition. It may also contain a sizing agent which may be, for example, a long chain alkylketene dimer, a wax emulsion or a succinic acid derivative. The composition may also contain dye and/or an optical brightening agent. The composition may also comprise dry and wet strength aids such as, for example, starch or epichlorhydrin copolymers.

*- ceramic composition*

The electrically conducting talc composition may be incorporated in ceramic compositions, which in turn can be used to prepare articles therefrom. As used herein, the term "ceramic" means an inorganic, generally non-metallic, solid prepared by the action of heat and subsequent cooling. The ceramic composition may have a crystalline structure, or partly crystalline structure. The ceramic composition may be derived from a one or more of a mixture of oxides, e.g., alumina, aluminosilicate, zirconia, silica, etc., and non-oxides, e.g., carbide, boride, nitride and silicide. The ceramic composition may be prepared by combining the desired amount of the electrically conducting talc composition, particularly a carbon nanotube coated talc composition, with an amount of ceramic precursor materials, i.e., materials such as those described above which will form a ceramic material upon heating and subsequent cooling, and optionally any suitable ceramic processing aids. The electrically conducing talc composition may be mixed intimately with the ceramic precursor materials, optionally with a liquid medium, such as water, and then further processed in a conventional manner to obtain a ceramic composition. For example, the mixture of electrically conducing talc composition and ceramic precursor materials may be dried, and optionally aged, to form a green body, which is then sintered or fired at a suitably high temperature to effect formation of a ceramic composition.

Analogous to the polymer compositions described above, the ceramic compositions may be shaped or formed for use in applications in which an electrically conductive ceramic is required to prevent damage or explosion risk from static electrical charge dissipation.

## EXAMPLES

*Measurement of electrical conductivity*

The electrical conductivity of the modified and non-modified talcum particles were measured in accordance with the following method. The setup comprises a hollow insulating cylindrical matrix and two copper pistons acting as electrodes. A talc sample is inserted between these two pistons which are compressed against each other in order to obtain a pellet. Both electrodes are connected via a Keithley 175 multimeter, which allows the measurement of the samples resistance depending on the applied pressure. The electrical conductivity $\sigma$ is then indicated by the following formula:

$$\sigma = \frac{1}{R} \cdot \frac{e}{s} \quad (1)$$

wherein R is resistance (in Ω), 'e' the pellet thickness (in cm) and 's' the pellet surface area (in cm). The measurement error of the resistivity is ± 4% and the apparatus may be used to measure electrical conductivities between about $1.10^{-8}$ $S \cdot m^{-1}$ and about 100 $S \cdot m^{-1}$.

As the samples were not compacted at the beginning of the measurement, the measured conductivity increases as the pressure applied to the copper pistons rises. By representing the conductivity against the pressure, an asymptotic curve is obtained, which approaches the intrinsic conductivity of the particles.

In order to verify the accuracy of this method, a second method was also used for some sample - the 4-point method of van der Pauw, L. J., 'A method of measuring specific resistivity and hall effect of discs of arbitrary shapes', Philips Res. Repts., 13 (1958), 1-9. According to this method, conductivity of a pelted sample was determined using a 4-point measurement apparatus comprising a Keithley 2400 generator and a 4-point matrix. This type of generator allows to measure resistances up to $10^{14}$ Ohm. The electrodes providing the current (exterior electrodes) and those collecting the induced potential, induced by the layer resistance (internal electrodes), are made of copper. The copper cables are electrically connected to the pellet through the silver plate. This measurement technique allows to access the U/I ratio. The conductivity is determined as follows:

$$\sigma = \frac{I}{U} \cdot \frac{1}{e \cdot K_f} \quad (2)$$

wherein I is the intensity of the applied current (in A), U the collected voltage (in V), 'e' the thickness of the pellet (in cm) and $K_f$ the shape factor. The shape factor is calculated on the basis of the parameters of the 4 points and the sample dimension. The measurement error of the resistivity is ± 3%.

The electrical conductivity of the talc samples tested using the first (2-point) method and the 4-point method were found to be analogous, indicating the simpler and quicker 2-point method is a suitable technique. The 2-point measurement method being simpler and quicker in use, this was used for all the measurements of electrical conductivity the talc samples prepared below. The quoted values are the electrical conductivities measured at 1500 kPa. They correspond to the electrical conductivities of compacted powders.

Electrical conductivity of the polymer composites was measured using a method of dynamic dielectric spectrometry (SDD). The measurements were carried out on a broad band dielectric spectrometer, Novocontrol BDS 4000, equipped with a frequency analyser gain/phase Solartron 1260, coupled to an active interface at low and high frequency (Broadband Dielectric Converter). The frequencies used range from $10^{-1}$ to 106 Hz and the measurements were carried out a room temperature or between -150°C and 100°C with a measuring step of 5°C.

*Example 1 -synthetic talc and carbon nanotubes*

In the following examples, the weight ratio of cobalt nitrate to talc was 1:12 or 1:6. These experiments were carried out separately using two natural talcs from France and China, respectively named TN1 and TN2, and two synthetic talcs TS220 and TS300, obtained by hydrothermal treatment at 220°C and 300°C respectively during 48 h. All four talcs were treated in an identical manner as shown below.

Cobalt nitrate was dissolved in distilled water. The talcs were added slowly to the solution under vigorous stirring. The suspensions were homogenized by agitation by sonication in an ultrasonic bath for 30 minutes and magnetic agitation for 1 hour, followed by drying on a rotary evaporator at 45°C. The resulting solid products were removed, milled in a mortar and then calcined at 250°C under air for 3 hours.

Reduction under hydrogen was carried out in a tube furnace using the following thermal cycle:

- raising temperature under $H_2$ (5 $L \cdot h^{-1}$) from 20°C to 600°C at 10°C/min, then from 600°C to 700°C at 5°C/min
- dwelling for 3 hours at 700°C under $H_2$ (5 $L \cdot h^{-1}$)
- cooling down (switching off the furnace) under $N_2$ at 10.8 $L \cdot h^{-1}$ during the 30 first minutes, then at 1.8 $L \cdot h^{-1}$ and removing from the furnace at a temperature below or equal to 80°C.

The gas flows were measured with mass flowmeters, apart from in the case of $N_2$ (ball flowmeter).

Carbon nanotubes were grown on and about the metal-impregnated talcs by catalytic chemical vapour deposition. The gas flows were measured with mass flowmeters, apart from in the case of $N_2$ (ball flowmeter). The following thermal cycle, carried out in a tube furnace, was used:

- raising temperature under $H_2$ (5 $L \cdot h^{-1}$) from 20°C to 600°C at 10°C/min, then from 600°C to 700°C at 5°C/min,
- dwelling for 1 hour at 700°C under $C_2H_4$ (3 $L \cdot h^{-1}$) diluted in $N_2$ (10.8 $L \cdot h^{-1}$),
- cooling down (switching off the furnace) under $N_2$ at 10.8 $L \cdot h^{-1}$ during the 30 first minutes, then at 1.8 $L \cdot h^{-1}$ and removing from the furnace at a temperature below or equal to 80°C.

SEM-FEG pictures confirmed the growth of carbon nanotubes on the surface of all the talc particles.

*Example 2 - natural/synthetic talc and polypyrrole*

Two synthetic talcs, designated TS220 and TS300, were used to prepare a series of electrically conducting talc compositions.

TS220 was prepared in accordance with the methods described in WO-A-2008/009801 and US-A-2009/0252963 in which a kerolite composition was prepared from a silicometallic gel of the formula $Si_4Mg_3O_{11} \cdot n'H_2O$, which was subjected to a hydrothermal treatment at saturation water vapour pressure and at a temperature of 220°C for a period of 2 days.

TS300 was prepared in accordance with the methods described in WO-A-2008/009801 and US-A-2009/0252963 in which a kerolite composition was prepared from a silicometallic gel of the formula $Si_4Mg_3O_{11} \cdot n'H_2O$, which was subjected to a hydrothermal treatment at saturation water vapour pressure and at a temperature of 300°C for a period of 2 days.

The first stage in the functionalization of the talc particulates was covalent grafting of two aminopropylsilanes: trimethoxysilyl propyl amine and silanetriol propyl amine.

The grafting of trimethoxysilyl propyl amine (TMPA) was carried out as follows: 1.5 g synthetic talc and 14 mmol TMPA were boiled under reflux in anhydrous toluene for 48 hours under a nitrogen atmosphere. The product was then centrifuged at 3000 rpm for 12 minutes, followed by washing, once with ethanol and three times with acetone, and then dried under vacuum for 2 hours.

The grafting of silanetriol propyl amine (SPA) was carried out as follows: 5 g synthetic talc and 3.5 mL SPA were combined in 40 mL ultra-pure water and stirred for 72 hours at room temperature. The product was centrifuged at 3000 rpm for 12 minutes, followed by washing (three times with water), then freeze-dried.

The second stage of talc functionalization was carried out by polymerization of pyrrole. The pyrrole was first purified by "trap to trap" distillation (26°C; $5.10^{-2}$ mbar) under vaccum. The distilled pyrrole was then transferred to a Schlenk tube which had previously been immersed in liquid nitrogen, thus avoiding pyrolle degradation.

The oxidative polymerization of pyrrole in the presence of the synthetic was carried out in an Ultra-Turrax The oxidation of the pyrrole monomers was carried out by $FeCl_2$. Paratoluenesulfonic acid was added to the reaction mixture. The preparation is as follows: 6.99 g sodium paratoluenesulfonic acid was dissolved in 100 mL water. That solution was stirred with the Ultra-Turrax at 10,000 rpm and maintained at 0°C during the following stages: 2 g of talc was added to the solution and dispersed over a 10 minute period. 1 mL pyrrole was then added and the mixture stirred for 5 minutes. A solution consisting of 4.87 g iron (III) chloride and 50 mL water was added dropwise to initiate polymerization. The solution quickly turned green and then black. The solution was further agitated by Ultra-Turrax for 1 hour, before being stirred with a magnetic stirrer for 3 hours. The resulting particles were then washed 3 times with water and then freeze-dried.

*Example 2a*

Functionalization by polypyrrole was also carried out on non-grafted synthetic talc particulates (TS220 and TS300), in accordance with the method described in Example 2a.

*Example 3 - electric conductivity results*

The electrical conductivity of the talc starting materials and the functionalized talc compositions was determined in accordance with the 2-point method described above. The results are shown in Figure 1.

TS220-PPy is polyprrole coated TS220 (per Example 2a).

TS220-Dy-PPy is SPA grafted, polypyrrole coated TS220 (per Example 2).

TS300-PPy is polypyrrole coated TS300 (per Example 2a).

TS300-Dy-PPy is SPA grafted, polypyrrole coated TS300 (per Example 2).

*Example 4 - preparation of polyethylene composites comprising an electrically conducting talc composition as prepared in Examples 1, 2 and 2a*

The polymer matrix was low density polyethylene (LDPE). The LDPE was a granulate of 5 mm having a melting point of 120°C (obtained by DSC). In each case, 6 g of an electrically conducting talc (as prepared in Examples 2 and 2a, i.e., TS220-PPy, TS220-Dy-PPy, TS300-PPy and TS300-Dy-PPy) were added to 200 mL toluene in a round-bottomed flask. This mixture was shaken vigorously and dispersed with a Rotor/stator mixer Ultra Turrax for 10 minutes. The LDPE (4 g) was then added to this mixture and magnetically stirred and heated under reflux (110°C) for 20 minutes to dissolve the LDPE. Thus, each polymer composite comprises 60 % by weight of the electrically conducting talc composition. This mixture was shaken vigorously and dispersed with a Rotor/stator mixer Ultra Turrax for 10 minutes. The toluene was then evaporated on a rotary evaporator and then dried under vacuum. This pre-mixture was then extruded in a double-screw extruder "Haake minilab II". The extrusion was carried out at 140°C with a rotation speed of the screws of 30 rpm and a cycling time of 15 min. At the end, a string of a composite is obtained. A hot press was then used to produce composite films whose conductivity was measured.

*Example 5 - electrical conductivity results*

The electrical conductivity of each of the polyethylene composites prepared in Example 4 was determined in accordance with the SDD method described above. Results are shown in Figure 2.

**Claims**

1. Electrically conducting talc composition comprising synthetic talc particulate coated with an electrically conducting coating agent.

2. Electrically conducting talc composition according to claim 1, wherein said coating agent comprises carbon nanotubes or an electrically conductive polymeric material.

3. Electrically conducting talc composition according to claim 1, wherein the coating agent comprises a nanocarbon material, for example, carbon nanotubes.

4. Electrically conducting talc composition according to claim 1, 2 or 3, wherein the talc composition further comprises a natural talc particulate.

5. Electrically conducting talc composition according to claims 1, 2 or 3, wherein the talc particulate consists of a synthetic talc particulate.

6. Electrically conducting talc composition according to any preceding claim, wherein the coating agent comprises or is carbon nanotubes, for example, single-wall and/or multi-wall carbon nanotubes.

7. Electrically conducting talc composition according to claim 6, further comprising a catalytically active metal, for example, a transition metal, such as, for example, cobalt.

8. Electrically conducting talc composition according to any one of claims 2, 4 or 5, further comprising a connecting chemical linker moiety between the surface of the talc particles and electrically conductive polymeric material.

9. Electrically conducting talc composition comprising natural talc particulate coated with an electrically conductive polymeric material, with the proviso that when the talc composition comprises no particulate other than natural talc particulate, the talc composition further comprises a connecting chemical linker between a surface of the natural talc particles and at least a portion of the electrically conducting polymeric material.

10. Electrically conducting talc composition according to any one of claims 2, 4, 5, 8 or 9, wherein the chemical linker moiety is a moiety of the form X-Y-Z in which Z is chemical group which will form a covalent bond with the electrically conductive polymeric material, X is a trialkoxysilane or silanetriol group, and Y is any chemical group suitable for linking X and Z, for example, an alkylene group.

**11.** Electrically conducting talc composition according to any preceding claim, wherein the talc particulate comprises at least about 60 % by weight of the talc composition.

**12.** A method of making an electrically conducting talc composition according to claim 1, comprising forming electrically conducting coating agent on or about particles of the talc particulate.

**13.** The method of claim 12, comprising either: (1) forming carbon nanotubes on or about particles of the talc particulate; or (2) forming an electrically conducting polymeric material on or about particles of the talc particulate.

**14.** A method of making an electrically conducting talc composition according to claim 9, comprising: (1) combining a chemical linker moiety and natural talc particulate under suitable conditions to produce natural talc particulate comprising talc particles having chemical linker moieties attached thereto; and (2) forming an electrically conducting polymer material on or about particles of the talc particulate, wherein at a least a portion of the electrically conducting polymeric material is connected to the talc particles via the chemical linker moiety.

**15.** A method according to claim 13 or 14, wherein forming an electrically conducting polymeric material comprises *in situ* polymerisation of appropriate polymer precursors.

**16.** A functional composition comprising an electrically conducting talc composition according to, or obtainable by, any preceding claim.

**17.** The functional composition according to claim 16, wherein the functional composition is a polymer composition, or a paper composition, or a paint composition, or a coating composition, or a ceramic composition.

**18.** A polymer composition according to claim 17, wherein the polymer is a polyalkylene, for example, polyethylene.

**19.** Use of a electrically conducting talc composition according to, or obtainable by, any one of claims 1-15 as a filler in a functional composition, for example, a polymer composition.

**20.** Use according to claim 19, wherein the polymer of the polymer composition is inherently electrically non-conducting.

FIGURE 1

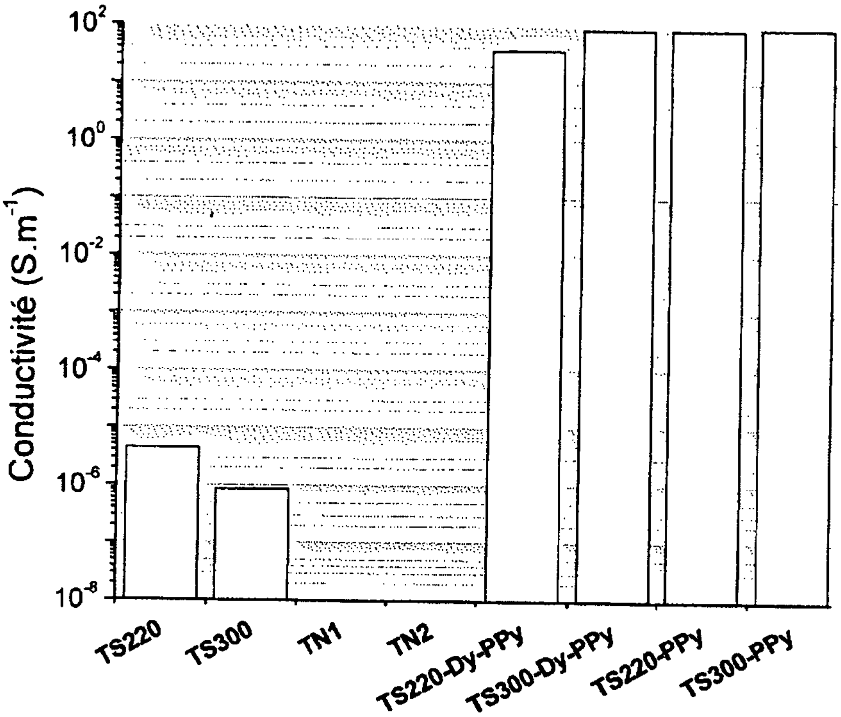


FIGURE 2

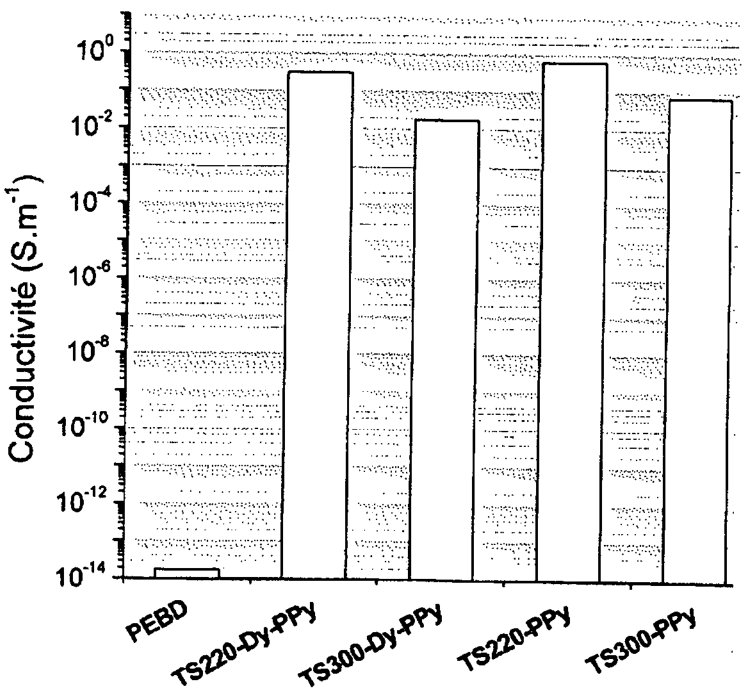

Europäisches Patentamt
European Patent Office
Office européen des brevets

# EUROPEAN SEARCH REPORT

Application Number
EP 12 29 0451

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DE 100 57 306 A1 (NUERNBERGER CHRISTIAN [DE]) 23 May 2002 (2002-05-23)<br>* paragraphs [0009] - [0012] *<br>* examples 1-4 *<br>* claims 1-13 *<br>----- | 1,2,4,9, 11-13, 15-20 | INV.<br>H01B1/04<br>C01B31/02<br>C09C1/28<br>D21H17/69 |
| X | US 4 937 060 A (KATHIRGAMANATHAN POOPATHY [GB] ET AL) 26 June 1990 (1990-06-26) | 1,2,4,9, 11-13, 15-20 | |
| Y | * column 1, line 24 - column 4, line 51 *<br>* examples 1-29 *<br>----- | 5,8,14 | |
| X | US 7 862 795 B2 (ZHANG XINJIE [US] ET AL) 4 January 2011 (2011-01-04)<br>* column 3, line 8 - column 6, line 27 *<br>----- | 1-4,6,7, 12,13 | |
| Y | DA FONSECA M G ET AL: "New amino-inorganic hybrids from talc silylation and copper adsorption properties",<br>MATERIALS RESEARCH BULLETIN, ELSEVIER, KIDLINGTON, GB,<br>vol. 36, no. 1-2,<br>1 January 2001 (2001-01-01), pages 277-287, XP004233446,<br>ISSN: 0025-5408, DOI: 10.1016/S0025-5408(00)00470-0<br>* page 278 - page 279 *<br>----- | 5,8,14 | TECHNICAL FIELDS SEARCHED (IPC)<br>H01B<br>C01B<br>C09C<br>D21H |

1

The present search report has been drawn up for all claims

| Place of search | Date of completion of the search | Examiner |
|---|---|---|
| The Hague | 6 June 2013 | Marino, Emanuela |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO. EP 12 29 0451

This annex lists the patent family members relating to the patent documents cited in the above-mentioned European search report. The members are as contained in the European Patent Office EDP file on
The European Patent Office is in no way liable for these particulars which are merely given for the purpose of information.

06-06-2013

| Patent document cited in search report | Publication date | Patent family member(s) | Publication date |
|---|---|---|---|
| DE 10057306 A1 | 23-05-2002 | NONE | |
| US 4937060 A | 26-06-1990 | EP 0302601 A1 | 08-02-1989 |
| | | JP H01301714 A | 05-12-1989 |
| | | US 4937060 A | 26-06-1990 |
| | | US 4956441 A | 11-09-1990 |
| US 7862795 B2 | 04-01-2011 | AU 2005307779 A1 | 26-05-2006 |
| | | CA 2588111 A1 | 26-05-2006 |
| | | EP 1838616 A2 | 03-10-2007 |
| | | JP 2008520526 A | 19-06-2008 |
| | | KR 20070086187 A | 27-08-2007 |
| | | US 2006239893 A1 | 26-10-2006 |
| | | US 2008175786 A1 | 24-07-2008 |
| | | WO 2006055679 A2 | 26-05-2006 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2008009800 A
- US 20090253569 A
- WO 2008009801 A
- US 20090252963 A
- WO 2008009799 A
- US 20090261294 A
- WO 20120852391 A
- FR 2012051594 W


### Non-patent literature cited in the description


- **PAUW, L. J.** A method of measuring specific resistivity and hall effect of discs of arbitrary shapes. *Philips Res. Repts.,* 1958, vol. 13, 1-9